Europäisches Patentamt

European Patent Office

Office européen des brevets

(19)

(11) **EP 0 493 855 B1**

(12) **FASCICULE DE BREVET EUROPEEN**

(45) Date de publication et mention
de la délivrance du brevet:
**11.03.1998 Bulletin 1998/11**

(51) Int Cl.6: **G06T 5/40**

(21) Numéro de dépôt: **91203340.4**

(22) Date de dépôt: **18.12.1991**

(54) **Procédé de segmentation binaire locale d'images numérisées, par seuillage d'histogramme**

Lokal binäre Teilungsverfahren von numerischen Bildern durch Schwellwertbestimmung

Local binary segmentation of digital images by histogram thresholding

(84) Etats contractants désignés:
**DE FR GB**

(30) Priorité: **21.12.1990 FR 9016109**

(43) Date de publication de la demande:
**08.07.1992 Bulletin 1992/28**

(73) Titulaires:
- **LABORATOIRES D'ELECTRONIQUE PHILIPS
  S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB**

(72) Inventeur: **Florent Raoul, Société Civile S.P.I.D.
F-75008 Paris (FR)**

(74) Mandataire: **Landousy, Christian et al
Société Civile S.P.I.D.
156, Boulevard Haussmann
75008 Paris (FR)**

(56) Documents cités:
**FR-A- 2 555 003**

- **NOUVEL AUTOMATISME vol. 30, no. 51, Janvier
  1985, PARIS D. CHEKROUN: 'La vision
  artificielle'**
- **PATENT ABSTRACTS OF JAPAN vol. 10, no. 354
  (P-521)(2410) 28 Novembre 1986 & JP-A-61 153
  771 ( CANON )**

## Description

L'invention concerne un procédé de segmentation binaire par seuillage d'histogramme, appliqué à une image constituée de pixels ayant des intensités numérisées, pour déterminer automatiquement la limite entre une zone de l'image appelée cible et le fond de l'image d'intensité potentiellement bruitée, cette limite étant appelée seuil de segmentation.

L'invention trouve son application par exemple dans le traitement d'images infrarouges de cibles en mouvement, dans la surveillance du trafic routier.

Par segmentation binaire, il faut entendre le fait de pouvoir, dans une image numérisée, classifier les pixels sur la base de leur niveau de gris, dans le but de les étiqueter comme appartenant au fond ou bien à une cible.

On rappelle qu'une image est un ensemble de pixels et que chaque pixel à un certain niveau de gris codé sur un certain nombre de bits. Par exemple, si le codage est fait sur 8 bits, les niveaux de gris peuvent prendre toutes les valeurs entre 0 et 255. On considèrera que la valeur 255 correspond à un pixel brillant et la valeur 0 à un pixel noir.

Faire l'histogramme d'une image consiste à réaliser le comptage du nombre des pixels qui, dans l'image, correspondent à chacun des niveaux de gris. Ce comptage permet d'établir une courbe dans laquelle les niveaux de gris, par exemple 0 à 255, sont portés en abscisse, et le nombre des pixels correspondant à chacun des niveaux est porté en ordonnée.

Ainsi, l'histogramme des images à segmenter est formé de pics caractéristiques des différentes composantes de l'image : fond, objets brillants. La segmentation des objects brillants consiste alors à déterminer sur l'histogramme le niveau de gris marquant le pied du pic correspondant à ces objets.

Par exemple, l'histogramme l'une image représentant un object brillant sur un fond noir, fournira une courbe qui montre d'abord une partie correspondant à un nombre de pixels grand et relativement constant dans les niveaux de gris inférieurs, puis un minimum correspondant à un faible nombre de pixels en allant vers les niveaux de gris plus élevés, et enfin une partie correspondant à un grand nombre de pixels, avant une nouvelle décroissance dans les niveaux de gris les plus élevés. Le minimum de cette courbe correspond à la césure entre la partie à faibles niveaux de gris qui représente le fond, et la partie à forts niveaux de gris qui représente l'objet à détecter.

D'autre part, faire l'histogramme cumulé d'une image consiste à réaliser le comptage, pour chaque niveau de gris, du nombre des pixels cumulés qui ont un niveau de gris inférieur au niveau de gris donné. Ce comptage permet encore d'établir une courbe dans laquelle les niveaux de gris, par exemple 0 à 255, sont portés en abscisse, et le nombre des pixels cumulés est porté en ordonnée.

La courbe réalisée dans le procédé d'histogramme cumulé est donc la représentation d'une fonction croissante, à la différence de la courbe obtenue dans le procédé d'histogramme simple. Cette fonction est croissante du fait que, en passant d'un niveau de gris à un autre plus élevé, on ajoute au nombre des pixels trouvé pour le premier, un nombre de pixels soit nul soit positif.

En reprenant l'exemple considéré précédemment en référence avec la définition de l'histogramme simple, l'histogramme cumulé de la même image fournira une courbe qui montre d'abord une partie croissant approximativement linéairement, correspondant au fond, puis une partie où le nombre des pixels reporté en ordonnée est à peu près constant, correspondant à la région où le nombre des pixels ajoutés décroît d'un niveau de gris à l'autre lorsque l'on va vers des niveaux croissants, et enfin une partie à nouveau croissante correspondant à l'objet.

Un procédé de segmentation par seuillage d'histogramme est déjà connu de la publication "La vision artificielle, Algorithme de traitement d'images et architecture" par Djamel Chekrun, dans "Le nouvel Automatisme Janv.Fevr. 1985, p.45-51.

Ce document décrit des procédés de transformation d'une image, allant de la transformation de l'image optique en signaux électriques à la mise en jeu d'algorithmes plus complexes pour améliorer les contrastes, filtrer, restaurer, coder, segmenter, modéliser l'image et reconnaître des formes, par l'utilisation de processeurs.

Dans le paragraphe consacré à la segmentation, on décrit une segmentation par séparation de l'image en un certain nombre de zones homogènes en intensité. Pour obtenir ce résultat, on réalise un histogramme simple des intensité. Puis on applique des seuils à cet histogramme. Si une image présente de nombreux pixels sombres, suivi d'un faible nombre de pixels plus brillants, cela signifie qu'un objet sombre repose sur un fond brillant, et la segmentation consiste à placer le seuil entre les deux zones (pied des pics). Tous les pixels en dessous du seuil prennent la valeur 0 et les autres la valeur 1. Une autre méthode pour repérer les frontières entre régions est d'utiliser un opérateur gradient. Pour ne voir que les frontières, il suffit de faire passer sur l'image un filtre passe-haut exponentiel ou trapézoïdal.

Au préalable, on peut éliminer un bruit parasite en moyennant l'information par un filtrage passe-bas.

Un des buts de l'invention est de fournir un procédé qui met en oeuvre l'histogramme, comme outil de segmentation.

Un des buts de l'invention est fournir un procédé de segmentation automatique des images, c'est-à-dire un procédé automatique de détermination de celui des niveaux de gris qui réalise la césure entre les niveaux de gris qui appartiennent au fond et ceux qui appartiennent à la cible : il faut entendre par là un procédé de détermination automatique de la valeur limite ou seuil des niveaux de gris qui appartiennent à la cible dans le but de sélectionner seulement les niveaux de gris qui appartiennent à la cible, et d'éliminer le fond.

On a vu que dans l'histogramme simple, cette césure correspond au pied des pics, alors que dans l'histogramme cumulé, la césure correspond au point de rupture de pente entre une région plate et une accélération de la progression des niveaux de gris.

Concernant les problèmes de segmentation par seuillage, et le seuillage d'histogramme, on lira avec profit l'ouvrage intitulé "Computer Science and Applied Mathematic : Digital Picture Processing" par Ariel Rosenfeld et Avinash C. Kak, publié par "Academic Press, New York, San Francisco, London, 1976", et plus particulièrement le chapitre 8, intitulé "Segmentation" pages 260 et suivantes.

D'autre part, le procédé selon l'invention se propose de résoudre le problème de la segmentation d'une image contenant un ou plusieurs objets mobiles. On supposera alors, que, par des techniques de différences connues de l'homme du métier, on a obtenu une connaissance de la localisation du ou des objets dans l'image, et que chacun des objets a des dimensions bornées. Il s'ensuit que l'objet peut éventuellement être étudié dans une fenêtre, par exemple de 50 x 50 pixels, c'est-à-dire dans une portion d'image ou imagette.

Ainsi, un des buts de l'invention est de proposer un procédé qui s'applique de préférence à un ou des objets localisés dans une imagette, mais qui cependant peut s'appliquer également à des objets localisés dans l'image complète.

Donc, un des buts de l'invention est de fournir un procédé de segmentation binaire locale.

Cependant, les procédés de segmentation par histogramme connus de l'état de la technique souffrent d'une grave lacune résidant dans le fait que l'histogramme ne prend pas en compte la répartition géographique, ou topologie, des pixels. C'est-à-dire que, lors de l'établissement de l'histogramme, on effectue le comptage des pixels à un certain niveau de gris indépendamment de leur localisation dans l'image. Ce comptage n'apporte donc qu'une information statistique sur l'image et non pas une information morphologique.

Ainsi, lors d'une diminution de y pixels entre deux seuillages définis par deux niveaux de gris successifs X et X+1, les méthodes connues de seuillage d'histogramme ne distinguent pas les deux événements suivants :

-   les deux seuillages consécutifs ont vu disparaître Y pointes de bruits dans l'image numérisée segmentée et ont laissé l'objet à segmenter inchangé,
-   les deux seuillages consécutifs ont vu une évasion de Y pixels de l'objet à segmenter et n'ont pas modifié le bruit de segmentation.

Ces deux événements conduisent à des conclusions opposées sur le choix du seuil de segmentation. Donc si on applique l'un des procédés connus de seuillage d'histogramme à un objet brillant sur un fond plus noir mais bruité, on arrive à la détermination du seuil avec une grande imprécision, du fait que le seuil se situe dans un région où la contribution en nombre de pixels brillants vient soit de l'objet à détecter, soit des pointes de bruits disséminées dans le fond.

Les problèmes cités sont résolus et les buts de l'invention sont atteints au moyen d'un procédé tel que défini dans la revendication 1.

Ainsi la répartition topologique des pixels par niveau de gris est prise en compte, ce qui permet de résoudre les problèmes d'incertitude sur le choix du seuillage le plus approprié à la segmentation.

Par exemple, selon l'invention, dans le scénario précédent d'un objet brillant sur un fond noir bruité, la courbe d'histogramme montrera d'une part, dans les niveaux de gris les plus faibles, un pic correspondant au dénombrement de l'objet à détecter auquel viennent se cumuler toutes les pointes de bruit disséminées dans la zone du fond, et d'autre part, dans les niveaux de gris plus élevés, une partie sensiblement plane correspondant seulement au nombre d'objets à détecter qui est sensiblement constant.

Dans une mise en oeuvre du procédé selon l'invention ce dernier est caractérisé en ce que l'étape de détermination du seuil de segmentation comprend des sous-étapes de :

évaluation des dérivées d'intensité vers la gauche et vers la droite en des points de la courbe d'histogramme,
détermination du seuil de segmentation par le calcul de l'intensité d'un point sur la courbe d'histogramme à partir duquel la dérivées d'intensité évaluée vers un côté est proche de zéro et la dérivée d'intensité évaluée vers l'autre côté est proche de l'infini.

Ainsi le procédé selon l'invention permet de distinguer les deux événements décrits plus haut. En effet, dans le premier cas, le nombre d'objets entre les seuillages à X et à X+1, diminue maintenant de Y, alors que dans le second cas le nombre d'objets reste inchangé. Par conséquent les deux événements peuvent être parfaitement dissociés et peuvent conduire à des segmentations différentes.

Dans une mise en oeuvre du procédé selon l'invention, ce dernier est particulièrement fiable pour déterminer ce point, du fait qu'il est caractérisé en ce que l'étape de détermination du seuil de segmentation comprend des sous-étapes de :

évaluation des dérivées d'intensité vers la gauche et vers la droite en des points de la courbe d'histogramme,
évaluation d'une fonction prenant en compte les dérivées d'intensité vers la gauche et vers la droite desdits points de la courbe d'histogramme en utilisant la relation :

$$G(X) = \alpha(X)^2 + [\beta(X) - \pi/2]^2$$

fonction dans laquelle $\alpha$ est l'arctg de la dérivée d'intensité à droite selon l'abscisse des variables d'intensité de la courbe d'histogramme, et dans laquelle $\beta$ est l'arctg de la dérivée d'intensité à gauche dans le cas où la cible est un objet brillant sur un fond sombre,

détermination du seuil de segmentation par le calcul de l'intensité ($X_0$) d'un point (P) sur la courbe d'histogramme qui rend minimale ladite fonction [G(X)] des dérivées d'intensité.

L'invention est décrite ci-après en détail, en référence avec les figures schématiques annexées, dont :

- la figure 1, qui représente, vu du dessus, une image comprenant un objet brillant, sur fond noir, avec des lignes d'égal niveau de gris ;
- la figure 2, qui représente un exemple d'histogramme cumulé du nombre d'objets par niveau de gris ;
- la figure 3, qui représente une chaîne fonctionnelle pour mettre en oeuvre le procédé selon l'invention.

On rappellera d'abord que :

- Dans une image binaire, une distance interpixel étant donné, deux pixels sont dits connectes si la distance qui les sépare est inférieure à une distance de référence.
- Dans une image binaire, un objet est défini par un ensemble maximal de pixels connectes.

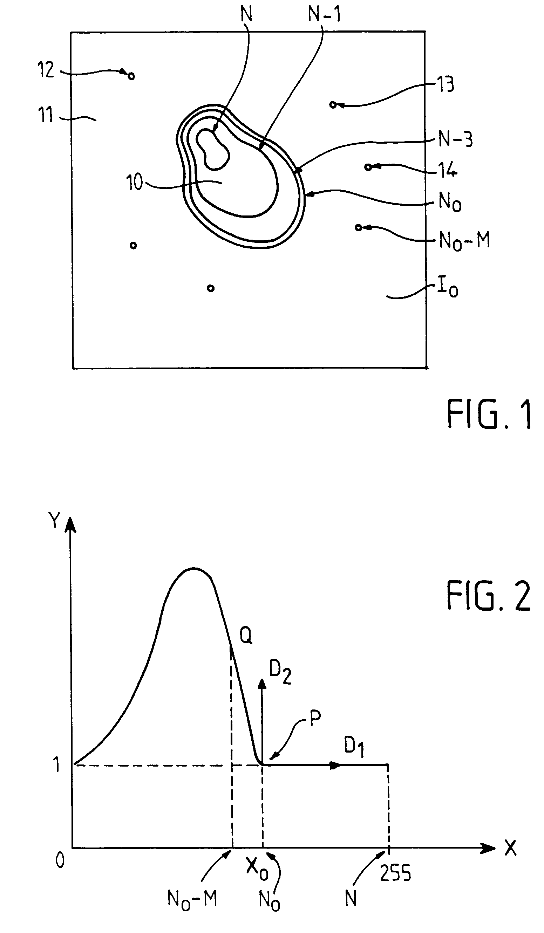

En référence avec la figure 1, l'image à segmenter est une imagette $I_0$. On se place dans le cas où l'imagette $I_0$ est localisée dans une image I d'un objet mobile. Par des techniques de différences, connues de l'homme du métier, on réalise d'abord la détection d'un objet dans l'image I, ainsi qu'une localisation approximative de cet objet. On se place également dans le cas où l'objet a des dimensions bornées, et où il peut être entièrement compris dans une fenêtre, du type par exemple 50 x 50 pixels, délimitant l'imagette $I_0$.

En utilisant une restriction à l'imagette, au lieu d'appliquer directement le procédé à l'image entière, on a l'avantage de pouvoir faire appel à une méthode (ou algorithme) permettant une segmentation plus précise, mais plus gourmande en temps de calcul que les procédés connus.

Le procédé selon l'invention peut être appliqué à des images complètes et fonctionner de façon totalement satisfaisante.

Cependant, de manière préférentielle, il sera plutôt appliqué à des imagettes dans lesquelles se trouvent 1 ou 2, ou peu d'objets à segmenter.

Ce procédé s'appuie sur une méthode de segmentation par seuillage d'histogramme.

Une telle méthode suppose que l'objet ou les objets, et le fond sont disjoints du point de vue de leur niveau de gris. Si l'on travaille sur des imagettes, cette hypothèse est en général vérifiée, et la méthode peut alors s'appliquer.

L'invention concerne alors un procédé de détection automatique de la césure entre le fond et l'objet, et notamment un procédé qui apporte une information morphologique dans la construction de la courbe d'histogramme.

En référence avec la figure 1, l'image à segmenter comprend un objet brillant 10, sur un fond noir bruité 11, contenant des pointes de bruits 12, 13, 14 etc formées de pixels brillants sur le fond noir.

L'objet brillant 10 n'est pas uniforme en niveau de gris, ce qui est le cas le plus général, du fait que l'image provient d'un phénomène physique et que les phénomènes physiques sont, le plus souvent, continus. L'objet montre donc un centre très brillant. Ce centre peut être par exemple le moteur d'un véhicule dans une image infrarouge. S'il s'agit d'un moteur, ce dernier diffuse, et l'image montre, autour du centre très brillant, une atténuation des niveaux de gris en général continue du coeur de l'objet vers l'extérieur.

Donc si le coeur de l'objet a un niveau de gris N, considérant l'échelle des niveaux de gris de N à 0, par exemple de 255 à 0, en repérant sur l'image les différents niveaux de gris, lorsque l'on descend l'échelle des niveaux de gris à partir de N, on trouve des lignes d'égal niveaux de gris, à N-1, N-2, etc, dont le périmètre est de plus en plus élevé. On arrive ainsi à une valeur $N_0$ qui correspond aux limites extrêmes de l'objet, à partir de laquelle on ne voit plus la surface de ce dernier s'étendre. En descendant encore l'échelle des niveaux de gris à partir de $N_0$, on entre dans le fond, qui est diffus et réparti sur toute l'imagette. En arrivant dans la zone du fond on voit apparaître des pointes de bruits 11, 12, 13, 14 etc.. dont le niveau de gris est cependant inférieur au niveau $N_0$, par exemple $N_0$ -M.

Le niveau de gris $N_0$, qui fait la césure entre le fond et l'objet, est le seuil que le procédé selon l'invention se propose de détecter.

Ce but est atteint en construisant une courbe d'histogramme cumulé du nombre d'objets de l'image $I_0$ par niveau de gris, cet histogramme étant défini comme la fonction qui, à chaque niveau de gris X, associe le nombre d'objets Y contenus dans l'image binaire, nombre obtenu par seuillage de l'image $I_0$ audit niveau de gris X, et par comptage du nombre des objets en fonction d'une distance de référence, et en déterminant le seuil de segmentation à partir de cet histogramme.

Ainsi selon l'invention, on ne mesure pas le nombre des pixels comme il était connu de l'état de la technique, mais le nombre des objets dans l'image, un objet étant un ensemble de pixels connectés tel que défini plus haut.

En référence avec la figure 1, on observe que, entre le niveau de gris maximal N, et le niveau de gris $N_0$ qui

correspond aux bords externes de l'objet, on trouve un seul objet, l'objet 10. Donc si l'on construit la courbe d'histogramme cumulé du nombre d'objets, telle que montrée à titre d'exemple sur la figure 2, on trouve une partie plane de courbe correspondant à un nombre constant d'objets entre N et $N_0$.

En descendant l'échelle des niveaux de gris à partir de $N_0$, on arrive dans la zone du fond où l'on trouve une multiplication d'objets due au bruit. Sur la courbe de la figure 2, aux valeurs des niveaux de gris inférieures à $N_0$, on voit donc apparaître un pic correspondant à ce grand nombre d'objets. Puis, en descendant encore l'échelle des niveaux de gris, le nombre d'objets trouvés diminue, car dans les faibles niveaux de gris on commence à avoir des recombinaisons d'objets qui étaient fragmentés et qui vont fusionner. Ensuite au niveau de gris O, dû à la recombinaison, on trouve finalement un seul objet.

Dans sa partie plane, la courbe de la figure 2 est très lisse, car en passant d'un niveau de gris au niveau de gris inférieur, l'objet représenté sur la figure 1 grossit, mais le nombre d'objets contenus dans l'image ne varie pas. Dans l'exemple choisi le nombre d'objets est toujours 1.

Il apparaît donc que la courbe obtenue, quel que soit le nombre d'objets à détecter dans l'imagette, est très différente de la courbe d'histogramme classique déjà décrite. Notamment elle n'est pas monotone puisqu'elle présente au moins un pic, un flanc de pic décroissant puis une partie constante.

Le seuil que l'on cherche, qui est le meilleur seuil pour la segmentation, se situe au point précis P situé sur la courbe de la figure 2 avant l'apparition du bruit, en partant des niveaux de gris les plus élevés et en descendant l'échelle des niveaux de gris.

Donc à droite du point P, la courbe d'histogramme du nombre d'objets selon l'invention présente une partie horizontale, et à gauche du point P, cette courbe, due à l'explosion du nombre d'objets, présente une partie proche de la verticale.

Dans le but de déterminer l'abscisse X du point P correspondant au seuil $N_0$ des niveaux de gris recherché, on calculera la dérivée à gauche et à droite de la courbe des points dans la région présumée du seuil $N_0$. La dérivée à gauche et la dérivée à droite sont chacune représentées par un vecteur, respectivement $D_2$ et $D_1$.

Le seuil recherché correspond au point P de la courbe pour lequel à la fois :

- la dérivée à droite est proche de zéro,
- la dérivée à gauche est proche de moins l'infini.

Si l'on revient à l'exemple donné au début de l'exposé pour montrer les limitations de la méthode de seuillage d'histogramme simple telle que connue de l'homme du métier, on constate que, en utilisant la méthode de seuillage d'histogramme du nombre d'objets préconisée par l'invention :

- si l'on effectuait un seuillage à $N_0+1$, on ne modifierait pas le nombre d'objets mais ceux-ci seraient érodés ;
- si l'on effectuait un seuillage à $N_0-1$, on constaterait une augmentation importante du nombre d'objets car on entamerait le fond.

Le procédé selon l'invention permet donc de résoudre le problème de discrimination des deux événements soulevé précédemment, qui n'était pas résolu par l'état de la technique.

Pour améliorer les résultats du procédé selon l'invention, de préférence la courbe d'histogramme du nombre d'objets sera lissée.

Sur cette courbe lissée, si

$\alpha$ est l'arctg de la dérivée à droite en X,
$\beta$ est l'arctg de la dérivée à gauche en X,

le critère suivant a été choisi : le seuil de segmentation $X_0$, correspondant au niveau de gris $N_0$ et au point P de la courbe, est obtenu par la minimisation de la fonction :

$$G(X) = \alpha(X)^2 + [\beta(X) - \pi/2]^2$$

qui correspond à la minimisation par les moindres carrés sur une distance euclydienne.

Le procédé de segmentation selon l'invention peut être mis en oeuvre par un programme, à condition de prendre les précautions suivantes :

- il est préférable de soumettre l'imagette d'origine à un procédé d'uniformisation du fond ;
- on procèdera au calcul des dérivées sur des supports suffisamment grands.

En ce qui concerne le premier point, il arrive en effet que le fond se compose de deux grandes zones de niveaux de gris très différents. Il en résulte que, la courbe d'histogramme du nombre d'objets pourrait montrer deux pics correspondant au fond, au lieu d'un, et que entre les deux pics, on trouverait un minimum qui pourrait prêter à confusion avec le point P recherché.

Il faut donc éviter de se trouver dans ce cas, et par conséquent il vaut mieux rendre le fond uniforme.

Des outils sont connus de l'homme du métier pour effectuer une telle uniformisation du fond. Il s'agit notamment d'une technique morphologique dite du "chapeau haut-de-forme" (en anglais : TOP-HAT), qui est un filtrage morphologique. A la sortie du "chapeau haut-de-forme" le fond de l'imagette est uniforme et la courbe d'histogramme du nombre d'objets montre un seul pic, et donc la possibilité de détermination du point P sans ambiguïté.

Cependant, il faut noter que si le fond des imagettes est uniforme à l'origine, le "chapeau haut-de-forme" est inutile et ainsi le procédé selon l'invention est applicable directement sur de très nombreuses images.

En ce qui concerne le second point, étant donné que les images traitées par le présent procédé sont numérisées, il signifie que l'un doit calculer les dérivées en considérant un certain nombre de points à gauche et à droite du point présumé P. Afin d'éviter des erreurs qui pourraient être dues au bruit, il est, là aussi recommandé de lisser les courbes.

Le procédé selon l'invention a été testé sur de nombreuses séquences et a donné des résultats bien supérieurs aux seuillages d'histogramme classiques.

En particulier les avantages de la méthode sont les suivants :

- en tant que technique de segmentation par seuillage, elle n'induit aucune déformation des silhouettes des objets extraits. Ceci est dû au fait qu'elle ne nécessite pas l'utilisation de filtres linéaires, ce qui est le cas des méthodes de segmentation par relaxation, qui introduisent une déformation de la silhouette, et qui diminue la netteté de la silhouette ;
- cette méthode ne nécessite pas la détermination d'un seuil A PRIORI, puisque justement son but est la détermination d'un seuil de façon automatique ;
- cette méthode ne nécessite aucun paramètre critique. On a vu que l'on avait cependant besoin de définir quelques paramètres tels que les dimensions maximales de l'objet, ou bien la distance de référence pour définir les objets ; ou encore la taille de l'élément structurant du "chapeau haut-de-forme" ; mais ces paramètres peuvent être fixés une fois pour toutes pour un large éventail de séquences, et ils ne sont pas nombreux et ne sont pas critiques ; par exemple toutes les séquences qui ont été testées lors des tests de mise en oeuvre de l'invention, l'ont été avec les mêmes paramètres ;
- cette méthode est robuste au bruit ;
- elle fournit au cours du temps des silhouettes stables.

La seule restriction du procédé selon l'invention est qu'il est un peu gourmand en temps de calcul. Cela n'est pas un grand inconvénient du fait que l'on travaille de préférence sur des imagettes, donc sur un nombre faible de pixels.

Le procédé selon l'invention pourrait être implémenté sous la forme d'un dispositif incluant un nombre de processeur égal à celui des niveaux de gris dans l'image, auxquels on se propose de calculer le nombre d'objets. On aurait alors N processeurs en parallèle pour calculer chacun le nombre d'objets à un niveau de gris donné. Un tel dispositif, sans être impossible, serait cependant coûteux.

Du fait que le procédé selon l'invention est un peu gourmand en temps de calcul, il n'est pas prévu pour une utilisation en temps réel. Cependant ce temps de calcul n'est pas rédhibitoire. Ce temps de calcul permet de traiter une image en quelques secondes.

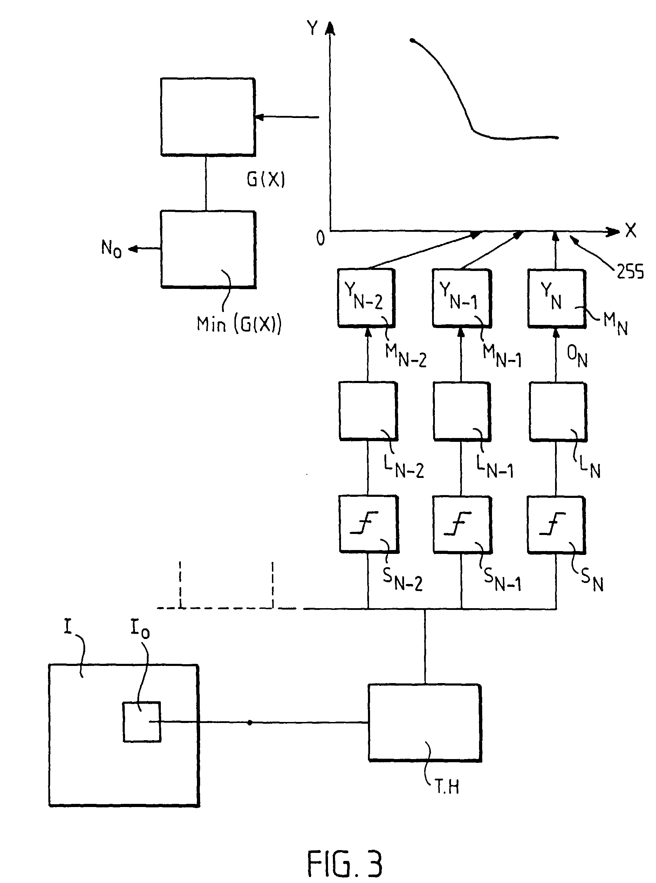

L'implémentation du procédé selon l'invention peut être fait selon la chaîne fonctionnelle montrée sur la figure 3.

On traite d'abord l'image I par différence pour localiser l'objet à segmenter par différence et définir l'imagette $I_0$ sur laquelle on va travailler. Cette étape se fait par des procédés de différence connus de l'homme du métier.

On passe ensuite l'imagette $I_0$ dans le filtre T.H du type "chapeau haut-de-forme" qui a la propriété de ne pas déformer les silhouettes, mais qui par contre est gros consommateur de temps, car il doit calculer des maxima et minima sur des zones étendues.

On trouve ensuite N voies en parallèle. Chaque voie comporte un seuillage, respectivement à N, N-1, N-2 etc où N est le niveau de gris maximal de l'image. Par exemple pour un codage sur 8 bits, le niveau de gris maximal est 255. Les seuillages sont référencés $S_N$, $S_{N-1}$, $S_{N-2}$ etc sur la figure 3.

Le seuillage étant passé, on calcule sur chacune des voies le nombre $Y = O_N$ d'objets dans l'image binaire obtenue par le seuillage précédent. Ce calcul est fait par un procédé connu de l'homme du métier sous le nom de labellisation ou étiquetage. On trouve donc N cellules de labellisation référencées $L_N$, $L_{N-1}$, $L_{N-2}$ etc sur la figure 3.

En référence avec la figure 3, on trouve ensuite sur chacune des voies une fonction de mémorisation du nombre $O_N$ dans une cellule. Les cellules de mémorisation sont référencées $M_N$, $M_{N-1}$, $M_{N-2}$ etc sur la figure 3.

Puis à partir de toutes les informations contenues dans les N cellules on construit la courbe d'histogramme du nombre d'objets Y par niveau de gris X, du type de celle qui est montrée sur la figure 2.

Ayant constitué cette courbe d'histogramme, on calcule ensuite les dérivées à gauche et à droite sur un support suffisant, comme déjà dit, puis on applique le critère G(X) et on cherche le minimum de ce critère.

En ce qui concerne la fonction de labellisation ou d'étiquetage, on a dit que l'on travaillait sur des pixels connectes, et, dans ce cas il est connu de l'homme du métier de réaliser des processeurs de labellisation.

La labellisation se fait alors en faisant sur le dispositif autant de passes qu'il y a de niveaux de gris à traiter. Pour économiser du temps, dans la pratique on peut s'abstenir de tracer entièrement la courbe d'histogramme et se limiter seulement à la zone intéressante qui comprend la partie constante et la partie du flanc du pic jusqu'à environ mi-hauteur (point Q sur la figure 2). La charge de calcul se trouve ainsi allégée. Dès que, en décrémentant les niveaux de gris, on constate une augmentation assez féroce du nombre d'objets, on arrête de construire la courbe, ce qui peut se faire en définissant a priori un critère d'arrêt. En général, au lieu des 256 passes qui seraient nécessaires sur le processeur, si on voulait construire une courbe complète, une centaine de passes sont suffisantes pour construire les parties intéressantes de la courbe contenant le point P recherché. Malgré tout, l'utilisation de ce dispositif rend le procédé dans ce cas environ 100 fois plus lent que le temps réel.

En ce qui concerne le procédé dit du "chapeau haut-de-forme", destiné à uniformiser le fond, il est connu de l'homme du métier et ne fait pas à proprement parlé partie de l'invention, en tant que tel.

Cette méthode du "chapeau haut-de-forme" est forte consommatrice de temps, mais en revanche fort utile dans les cas difficiles où le fond n'est pas uniforme. Elle ne dégrade pas la forme des objets de taille inférieure à la taille de son élément structurant.

La méthode du "chapeau haut-de-forme" peut être remplacée par toute autre méthode connue de l'homme du métier pour uniformiser le fond, pourvu qu'elle ne dégrade pas les silhouettes des objets à extraire.

## Revendications

1. Procédé de segmentation binaire par seuillage d'histogramme appliqué à une image (I) constituée de pixels ayant des niveaux de gris numérisés, pour déterminer automatiquement la limite entre une zone de l'image appelée cible (10) et le fond (11) de l'image, caractérisé en ce qu'il comprend des étapes

   pour construire une courbe d'histogramme du nombre d'objets dans l'image cumulés par niveau de gris, cet histogramme étant construit par, pour chaque niveau de gris X, un seuillage de l'image en utilisant ledit niveau de gris X comme seuil, une détermination, dans l'image ainsi obtenue, des ensembles de pixels appelés objets formés respectivement de l'ensemble maximal de pixels connectés, deux pixels étant dits connectés si leur distance interpixel est inférieure à une distance de référence, et une détermination du nombre desdits objets pour ledit niveau de gris X et pour déterminer un seuil de segmentation de la cible, par le calcul du niveau de gris (X0) d'un point (P) de la courbe d'histogramme situé à la limite entre une partie de ladite courbe de pente quasiment nulle correspondant à la cible (10) et une partie de ladite courbe de pente forte correspondant au fond (11).

2. Procédé selon la revendication 1, caractérisé en ce que l'étape de détermination du seuil $(X_0)$ de segmentation comprend des sous-étapes de :

   évaluation des dérivées (D1, D2) d'intensité (X) vers la gauche et vers la droite en des points de la courbe d'histogramme,

détermination du seuil de segmentation par le calcul de l'intensité $(X_0)$ d'un point (P) sur la courbe d'histogramme à partir duquel la dérivée (D1) d'intensité (X) évaluée vers un côté est proche de zéro et la dérivée (D2) d'intensité (X) évaluée vers l'autre côté est proche de l'infini.

3. Procédé selon la revendication 1, caractérisé en ce que l'étape de détermination du seuil $(X_0)$ de segmentation comprend des sous-étapes de :

   évaluation des dérivées (D1, D2) d'intensité (X) vers la gauche et vers la droite en des points de la courbe d'histogramme, évaluation d'une fonction [G(X)] prenant en compte les dérivées (D1, D2) d'intensité (X) vers la gauche et vers la droite desdits points de la courbe d'histogramme en utilisant la relation :

$$G(X) = \alpha(X)^2 + [\beta(X) - \pi/2]^2$$

   fonction dans laquelle $\alpha$ est l'arctg de la dérivée d'intensité à droite selon l'abscisse (X) des variables d'intensité de la courbe d'histogramme, et dans laquelle $\beta$ est l'arctg de la dérivée d'intensité à gauche dans le cas où la cible est un objet brillant sur un fond sombre, détermination du seuil de segmentation par le calcul de l'intensité $(X_0)$ d'un point (P) sur la courbe d'histogramme qui rend minimale ladite fonction [G(X)] des dérivées d'intensité.

4. Procédé selon l'une des revendications 1 à 3, caractérisé en ce qu'une fenêtre est passée sur l'image (I) pour déterminer une imagette $(I_0)$ contenant une seule cible ou un faible nombre de cibles à traiter indépendamment des autres cibles de l'image.

5. Procédé selon l'une des revendications précédentes, caractérisé en ce que la détermination des objets formés de pixels répondant à un critère de connexité est réalisée par une méthode de labellisation.

6. Procédé selon l'une des revendications précédentes, caractérisé en ce que préalablement à l'étape de construction de la courbe d'histogramme, il comprend une étape de :

   uniformisation du fond de l'image $(I,I_0)$ par un procédé dit du "chapeau haut-de-forme" ou toute méthode d'uniformisation du fond ne dégradant pas les silhouettes des objets à extraire.

7. Procédé selon l'une des revendication précédentes, caractérisé en ce que le comptage du nombre (Y) d'objets de l'image (I₀) pour chacun des niveaux d'intensité (X) est effectué dans une boucle comprenant autant de branches (N) que l'image (I) ou l'imagette (I₀) a de niveaux d'intensité, ces branches opérant en parallèle et comportant chacune :

une fonction de seuillage de l'image (I,I₀) à chaque niveau d'intensité (N, N-1, N-2, N-M), une fonction d'étiquetage (I_N, L_{N-1}...) pour déterminer le nombre des objets dans chaque image binaire obtenue à chaque seuillage, et une fonction de mémorisation (M_N, M_{N-1}...) du nombre d'objets (Y_N, Y_{N-1}...) trouvés à chaque niveau d'intensité,

et en ce que la courbe d'histogramme est construite à partir desdites mémorisations (M_N, M_{N-1}....).

8. Procédé selon la revendication 7, caractérisé en ce qu'il utilise ensuite des moyens de calcul pour calculer les dérivées de part et d'autre de points de la courbe d'histogramme, des moyens de calcul pour appliquer la fonction [G(X)] des dérivées sur la courbe d'histogramme, et des moyens de calcul pour évaluer le minimum de ladite fonction [G(X)].

## Patentansprüche

1. Verfahren zur binären Segmentierung durch Histogramm-Schwellwertbestimmung zur Anwendung auf ein Bild (I), das aus Pixeln mit digitalisierten Graustufen besteht, um automatisch die Grenze zwischen einem Zielobjekt (10) genannten Bereich des Bildes und dem Hintergrund (11) des Bildes zu bestimmen, dadurch gekennzeichnet, daß es Schritte umfaßt,

um eine Histogrammkurve der Anzahl von pro Graustufe kumulierten Objekten im Bild zu erstellen, wobei dieses Histogramm für jede Graustufe X durch eine Schwellwertbestimmung des Bildes unter Verwendung der genannten Graustufe X als Schwellwert und durch eine Bestimmung der Pixelmengen erstellt wird, die als jeweils aus der maximalen Menge verbundener Pixel gebildete Objekte bezeichnet werden, wobei zwei Pixel als verbunden bezeichnet werden, wenn ihr gegenseitiger Abstand geringer ist als ein Bezugsabstand, und eine Bestimmung der Anzahl der genannten Objekte für die genannte Graustufe X und zur Bestimmung einer Segmentierungsschwelle des Zielobjektes durch die Berechnung der Graustufe (X0) eines Punktes (P) der Histogrammkurve, der an der Grenze zwischen einem Teil der genannten Kurve mit einer Steigung von nahezu null liegt, der dem Zielobjekt (10) entspricht, und einem Teil der genannten Kurve mit einer großen Steigung, der dem Hintergrund (11) entspricht.

2. Verfahren nach Anspruch 1, dadurch gekennzeichnet, daß der Schritt zur Bestimmung der Segmentierungsschwelle (X₀) die folgenden Teilschritte umfaßt:

Berechnung der links- rund rechtsseitigen Ableitungen (D1, D2) der Intensität (X) an Punkten der Histogrammkurve, Bestimmung der Segmentierungsschwelle durch Berechnung der Intensität (X₀) eines Punktes (P) auf der Histogrammkurve, von dem aus die in Richtung der einen Seite berechnete Ableitung (D1) der Intensität (X) gegen null geht und die in Richtung der anderen Seite berechnete Ableitung (D2) der Intensität (X) gegen unendlich geht.

3. Verfahren nach Anspruch 1, dadurch gekennzeichnet, daß der Schritt zur Bestimmung der Segmentierungsschwelle (X₀) die folgenden Teilschritte umfaßt:

Berechnung der links- rund rechtsseitigen Ableitungen (D1, D2) der Intensität (x) an Punkten der Histogrammkurve, Berechnung einer Funktion [G(X)], die die Intensitätsableitungen in Richtung der linken und der rechten Seite der genannten Punkte der Histogrammkurve unter Verwendung der folgenden Beziehung berücksichtigt:

$$G(X) = \alpha(X)^2 + [\beta(X) - \pi(X) - \pi/2]^2$$

wobei in dieser Beziehung $\alpha$ der Arcustangens der rechtsseitigen Intensitätsableitung entlang der Abszisse (X) der Intensitätsvariablen der Histogrammkurve und $\beta$ der Arcustangens der linksseitigen Intensitätsableitung für den Fall eines hellen Objekts auf einem dunklen Hintergrund ist, Bestimmung der Segmentierungsschwelle durch Berechnung der Intensität (X₀) eines Punktes (P) auf der Histogrammkurve, der die genannte Funktion [G(X)] der Intensitätsableitungen minimal werden läßt.

4. Verfahren nach einem der Ansprüche 1 bis 3, dadurch gekennzeichnet, daß über das Bild (I) ein Fenster gelegt wird, um ein Teilbild zu bestimmen (I₀), das ein einziges Zielobjekt oder eine geringe Anzahl von Zielobjekten enthält, die unabhängig von den anderen Zielobjekten des Bildes verarbeitet werden sollen.

5. Verfahren nach einem der vorstehenden Ansprüche, <u>dadurch gekennzeichnet,</u> daß die Bestimmung der aus Pixeln bestehenden Objekte, die einem Verbundenheitskriterium entsprechen, durch ein Labeling-Verfahren erfolgt.

6. Verfahren nach einem der vorstehenden Ansprüche, <u>dadurch gekennzeichnet,</u> daß vor dem Schritt zur Erstellung der Histogrammkurve einen Schritt umfaßt zur:

Vereinheitlichung des Hintergrundes des Bildes $(I, I_0)$ durch ein sogenanntes "Top-Hat-Verfahren" oder jedes andere Vereinheitlichungsverfahren, das die Umrisse des zu extrahierenden Objekts nicht beeinträchtigt.

7. Verfahren nach einem der vorstehenden Ansprüche, <u>dadurch gekennzeichnet,</u> daß die Zählung der Anzahl $(Y)$ der Objekte des Bildes $(I_0)$ für jede Intensitätsstufe $(X)$ in einer Schleife erfolgt, die soviele Durchgänge $(N)$ umfaßt, wie das Bild $(I)$ oder das Teilbild $(I_0)$ Intensitätsstufen hat, wobei diese Durchgänge parallel erfolgen und jeder folgendes umfaßt:

eine Schwellenbestimmungsfunktion für das Bild $(I, I_0)$ bei jeder Intensitätsstufe $(N, N-1, N-2, N-M)$,
eine Etikettierungsfunktion $(L_N, L_{N-1}...)$ zur Bestimmung der Anzahl der Objekte in jedem binären Bild, das bei jeder Schwellwertbestimmung erhalten wurde,
und eine Speicherfunktion $(M_N, M_{N-1}...)$ für die Anzahl von Objekten $(Y_N, Y_{N-1})$, die bei jeder Intensitätsstufe gefunden wurden,

und daß die Histogrammkurve aufgrund der genannten Speicherungen $(M_N, M_{N-1})$ erstellt wird.

8. Verfahren nach Anspruch 7, <u>dadurch gekennzeichnet,</u> daß es danach Berechnungsmittel umfaßt, um die Ableitungen zu beiden Seiten von Punkten der Histogrammkurve zu berechnen, Berechnungsmittel, um die Funktion $[G(X)]$ der Ableitungen auf der Histogrammkurve anzuwenden, und Berechnungsmittel, um das Minimum der genannten Funktion $[G(X)]$ zu berechnen.

**Claims**

1. A method for binary segmentation by histogram thresholding, which method is applied to an image

$(I)$, consisting of pixels having digitized grey levels, for automatic determination of the boundary between an image zone, referred to as a target (10), and the background (11) of the image, characterized in that it comprises steps of

forming a histogram curve of the number of objects accumulated in the image by grey levels, said histogram being formed by thresholding the image, for each grey level X while using said grey level X as the threshold, determination of sets of pixels in the image thus obtained, which sets are called objects formed by a respective maximum set of linked pixels, two pixels being said to be linked if the distance therebetween is smaller than a reference distance, and determination of the number of said objects for said grey level X, and
determining a target segmentation threshold by calculation of the grey level $(X_0)$ of a point (P) of the histogram curve which is situated at the boundary between a part of said curve which has a slope which is quasi zero, corresponding to the target (10), and a part of said curve which has a steep slope and corresponds to the background (11).

2. A method as claimed in Claim 1, characterized in that the step for determining the segmentation threshold $(X_0)$ comprises the sub-steps of:

evaluation of intensity $(X)$ derivatives (D1, D2) to the left and to the right of points of the histogram curve,
determination of the segmentation threshold by calculating the intensity $(X_0)$ of a point (P) on the histogram curve as from which the intensity $(X)$ derivative (D1) evaluated to one side is close to zero and the intensity $(X)$ derivative (D2) evaluated to the other side is close to infinity.

3. A method as claimed in Claim 1, characterized in that the step for determining the segmentation threshold $(X_0)$ comprises the sub-steps of:

evaluation of the intensity $(X)$ derivatives (D1, D2) to the left and to the right of points of the histogram curve,
evaluation of function $[G(X)]$ taking into account the intensity $(X)$ derivatives (D1, D2) to the left and to the right of said points of the histogram curve while using the relation:

$$G(X) = \alpha(X)^2 + [\beta(X) - \pi/2]^2$$

in which function $\alpha$ is the arctan of the intensity derivative at the right according to the abscissa (X) of the intensity variables of the histogram curve, and β is the arctan of the intensity at the left in the case where the target is a bright object on a dark background, determination of the segmentation threshold by calculating the intensity $(X_0)$ of a point (P) on the histogram curve which minimizes said function [G(X)] of the intensity derivatives.

4. A method as claimed in one of the Claims 1 to 3, characterized in that a window is passed across the image (I) in order to determinate a sub-image $(I_0)$ which contains a single target or a small number of targets to be processed independently of the other targets of the image.

5. A method as claimed in one of the preceding Claims, characterized in that the determination of the objects consisting of pixels satisfying a linkage criterion is performed by means of a labelling method.

6. A method as claimed in one of the preceding Claims, characterized in that prior to the step of forming the histogram curve it comprises a step of:

   making the background of the image $(I,I_0)$ uniform by means of a so-called "top-hat" method or any other method of making the background uniform without degrading the contours of the objects to be extracted.

7. A method as claimed in one of the preceding Claims, characterized in that the counting of the number (Y) of objects of the image $(I_0)$ for each of the intensity levels (X) is performed in a loop which comprises as many branches (N) as there are intensity levels in the image (I) or the sub-image $(I_0)$, which branches operate in parallel and each branch has:

   an image $(I,I_0)$ thresholding function at each intensity level (N, N-1, N-2, N-M), a labelling function $(L_N, L_{N-1}...)$ for determining the number of objects in each binary image obtained by each thresholding operation, an a function $(M_N, M_{N-1}...)$ for storing the number of objects $(Y_N, Y_{N-1}...)$ found at each intensity level,

   and in that the histogram curve is formed on the basis of said stored information $(M_N, M_{N-1}...)$.

8. A method as claimed in Claim 7, characterized in that it subsequently utilizes calculation means for calculating the derivatives to both sides of points of the histogram curve, calculation means for applying the function [G(X)] of the derivatives on the histogram curve, and calculation means for evaluating the minimum of said function [G(X)].

N   N-1

12

11

13

N-3

14

10

N₀

N₀-M

I₀

FIG. 1

FIG. 2

Y

Q

D₂

P

D₁

1

0

X₀

255

X

N₀-M   N₀   N

FIG. 3